# EUROPEAN PATENT SPECIFICATION

(11) **EP 3 780 006 B1**
(45) Date of publication and mention of the grant of the patent: **14.06.2023**
(21) Application number: 18912483.7
(22) Date of filing: 05.12.2018
(51) Int. Cl.: G21C 19/06, G21C 15/18, G21D 1/02

(54) **MOBILE EMERGENCY COOLING APPARATUS FOR SPENT FUEL POOL OF NUCLEAR POWER PLANT**
MOBILE NOTKÜHLVORRICHTUNG FÜR BECKEN MIT VERBRAUCHTEM BRENNSTOFF EINER KERNKRAFTANLAGE
APPAREIL MOBILE DE REFROIDISSEMENT D'URGENCE POUR PISCINE DE COMBUSTIBLE USAGÉ DE CENTRALE NUCLÉAIRE

(30) Priority: 29.03.2018 CN 201810270172
(43) Date of publication of application: 17.02.2021
(73) Proprietor: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Group, Shenzhen, Guangdong 518031 (CN)
(72) Inventor: WANG, Zhixiao, Shenzhen, Guangdong 518100 (CN); LI, Shengjie, Shenzhen, Guangdong 518100 (CN); HU, Jian, Shenzhen, Guangdong 518100 (CN); WAN, Qian, Shenzhen, Guangdong 518100 (CN); WANG, Yaodong, Shenzhen, Guangdong 518100 (CN)
(74) Representative: Greaves Brewster LLP
(86) International application number: PCT/CN2018/119428
(87) International publication number: WO 2019/184432

(56) References cited:
- CN-A- 101 734 743
- CN-A- 102 831 942
- CN-A- 103 903 657
- CN-A- 104 051 034
- CN-A- 107 767 973
- CN-A- 108 492 899
- CN-B- 102 831 942
- CN-U- 204 555 799
- JP-A- 2013 029 320
- US-A1- 2013 121 454
- US-A1- 2017 148 533

## Description

### FIELD OF THE INVENTION

The present invention generally relates to nuclear power plants and, more particularly, relates to a mobile emergency cooling appraratus for spent fuel pool of nuclear power plant and an emergency cooling system for spent fuel pool of nuclear power plant.

### BACKGROUND OF THE INVENTION

Spent fuel pool is generally used to store spent fuel assembly released from the core during the previous refueling of nuclear power plants. Due to the decay heat of the spent fuel assembly in the spent fuel pool, the spent fuel pool needs to be cooled by a cooling system for spent fuel pool, to maintain the temperature of the pool water below a certain temperature, thereby preventing the equipments from being damaged due to excessively high temperature of the spent fuel pool under normal operating conditions, suppressing boiling of the spent fuel pool, preventing the evaporation of the spent fuel pool water and exposed melting of the spent fuel assembly under accident conditions, and avoiding a large amount of radioactive material leakage.

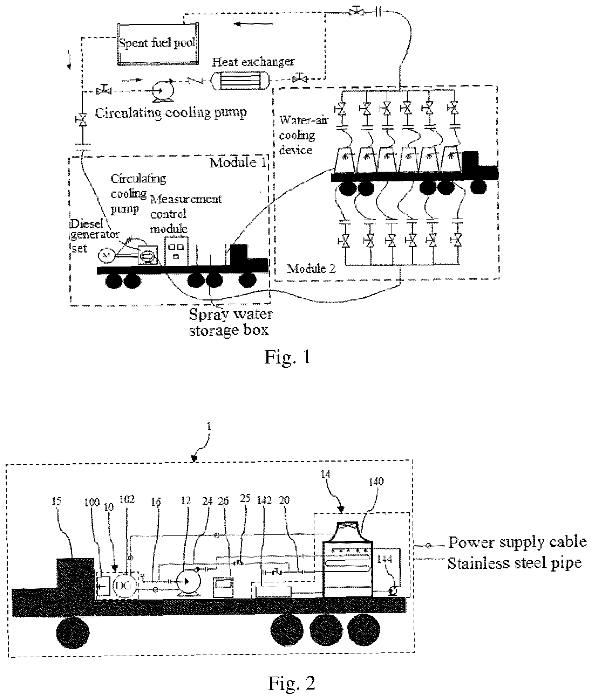

At present, a conventional emergency cooling apparatus for spent fuel pool is shown in Fig. 1. The cooling apparatus includes module 1 and module 2. Module 1 is an integrated mobile platform including a diesel generator set, a circulating cooling pump and a cooling water storage tank, and module 2 is another integrated mobile platform having a water-air cooling device. Each integrated platform is provided with various interfaces. The two integrated mobile platforms are transported to the nuclear power plant for assembly, so that module 1 and module 2 can cooperate to perform the cooling function. Such an emergency cooling apparatus is known e.g. from patent document CN 102 831 942 B.

However, module 1 and module 2 are carried separately and neither module can have cooling function alone. The platform needs on-site connection, to realize system function. Therefore, the system integration is low, the coordinated operation is poor, and complex connection is needed to be completed on-site between the platforms. The system functions can only be realized by connecting and corresponding debugging, and the commissioning speed is slow. In addition, since any module cannot have the cooling function alone, when any one of the two modules fails, the entire apparatus is unavailable and the apparatus availability is low.

In view of the foregoing, what is needed, therefore, is to provide a mobile emergency cooling apparatus for spent fuel pool of nuclear power plant and a emergency cooling system for spent fuel pool of nuclear power plant, to solve the problem of low integration, low device availability, poor coordinated operation, slow commissioning speed, easy scaling of equipment and poor cooling effect of the emergency cooling apparatus for spent fuel pool of nuclear power plant in the prior art.

### SUMMARY OF THE INVENTION

One object of the present invention is to overcome the disadvantages of the prior art and provide a mobile emergency cooling apparatus for spent fuel pool of nuclear power plant and an emergency cooling system for spent fuel pool of nuclear power plant, so as to solve the problem of low integration, low device availability, poor coordinated operation, slow commissioning speed, easy scaling of equipment and poor cooling effect of the emergency cooling apparatus for spent fuel pool of nuclear power plant in the prior art.

According to one embodiment of the present invention, a mobile emergency cooling apparatus for spent fuel pool of nuclear power plant includes a power equipment, a circulating cooling pump and a cooling device. The power equipment, the circulating cooling pump and the cooling device are connected in sequence and are provided on a same mobile carrier platform. The inlet of the circulating cooling pump is connected to a water guide pipeline connected to the water intake of the original cooling system of spent fuel pool via an inlet pipeline. The outlet of the circulating cooling pump is connected to the inlet of the cooling device. The outlet of the cooling device is connected to a return water pipeline via an outlet pipeline to return cooled pool water to the spent fuel pool. A backflow pipeline is connected between the outlet pipeline and the inlet pipeline. When the original cooling system of spent fuel pool fails, the power equipment drives the circulating cooling pump and the cooling device to work. The circulating cooling pump delivers the introduced pool water from the spent fuel pool to the cooling device. After the cooling device cools the pool water, part of the pool water is returned to the inlet pipeline through the backflow pipeline, and the remaining pool water is returned to the spent fuel pool.

Accordign to one aspect of the present invention, the power equipment includes a backup fuel tank and a generator set, the backup fuel tank is connected to the generator set and is configured to provide fuel to the generator set. The generator set is connected to the circulating cooling pump and the cooling device and is configured to drive the circulating cooling pump and the cooling device to work.

According to one aspect of the present invention, the cooling device includes a closed cooling tower. The inlet of the closed cooling tower is the inlet of the cooling device, and the outlet of the closed cooling tower is the outlet of the cooling device. After the pool water of the spent fuel pool delivered by the circulating cooling pump is cooled by the closed cooling tower, part of the pool water is returned to the inlet pipeline before the inlet of the circulating cooling pump via a backflow pipeline, and the remaining pool water is sent back to the spent fuel pool via the outlet pipeline and the return water pipeline.

Accordign to one aspect of the present invention, the cooling device includes a spray water supply tank connected to the closed cooling tower and configured to provide spray water to the closed cooling tower.

According to one aspect of the present invention, the backflow pipeline is provided with a backflow control valve configured to adjust the flow of the backflow water in the backflow pipeline.

According to one aspect of the present invention, the inlet pipeline is connected to the water guide pipeline via a flexible metal pipe, and the outlet pipeline is connected to the return water pipeline via a flexible metal pipe or a flexible rubber pipe.

According to one aspect of the present invention, the mobile emergency cooling apparatus for spent fuel pool of nuclear power plant further includes a shielding box. The shielding box covers the power equipment and the circulating cooling pump, and is provided with a control panel.

According to one aspect of the present invention, the generator set is connected with a lighting device.

According to one aspect of the present invention, a thermal insulation layer is at least partially provided on the pipeline between the circulating cooling pump and the closed cooling tower.

According to one aspect of the present invention, the power equipment drives the circulating cooling pump electrically or mechanically.

According to one aspect of the present invention, the mobile carrier platform is provided with a control panel.

According to another embodiment of the present invention, an emergency cooling system for spent fuel pool of nuclear power plant includes a spent fuel pool and at least one mobile emergency cooling apparatus for spent fuel pool of nuclear power plant of the present invention.

Compared with the prior art, the mobile emergency cooling apparatus for spent fuel pool of nuclear power plant of the present invention at least has the following advantages:
1) According to the present invention, the power equipment, the circulating cooling pump and the cooling device are provided on a same mobile carrier platform. Equipment integration, coordinated operation and commissioning speed of the equipments can be improved remarkably. In addition, the mobile emergency cooling apparatus for spent fuel pool of nuclear power plant of the present invention can be used as an independent cooling device for spent fuel pool to discharge heat of the spent fuel pool.
2) When the original cooling system of the spent fuel pool fails, the power equipment drives the circulating cooling pump and the cooling device to work. The circulating cooling pump dilivers the introduced spent fuel pool water to the cooling device, and the cooling device cools the pool water and sends the cooled pool water back to the spent fuel pool, to realize the cooling of the spent fuel pool.
3) A backflow pipeline is set between the outlet pipeline and the inlet pipeline, to control the pool water entering the cooling device at an appropriate temperature, thereby avoiding the high temperature water in the spent fuel pool entering the cooling device directly, preventing the cooling device from scaling rapidly, and improving cooling effect.

### BRIEF DESCRIPTION OF THE DRAWINGS

The mobile emergency cooling apparatus for spent fuel pool of nuclear power plant and the emergency cooling system for spent fuel pool of nuclear power plant of the present invention will now be described in detail with reference to the accompanying drawings, in which:
Fig. 1 shows a conventional emergency cooling apparatus for spent fuel pool of nuclear power plant;
Fig. 2 shows a mobile emergency cooling apparatus for spent fuel pool of nuclear power plant according to one embodiment of the present invention;
Fig. 3 shows arrangement of a backflow pipeline of the closed cooling tower according to one embodiment of the present invention; and
Fig. 4 shows an emergency cooling system for spent fuel pool of nuclear power plant according to one embodiment of the present invention.
10-power equipment; 100-backup fuel tank; 102-generator set; 12-circulating cooling pump; 14-cooling device; 140-closed cooling tower; 142-spray water supply tank; 144-spray pump; 15-mobile carrier platform; 16-inlet pipeline; 18-water guide pipeline; 19-connecting pipeline; 20-outlet pipeline; 22-return water pipeline; 23-connecting pipeline; 24-backflow pipeline; 25-backflow control valve; 26-control panel; 1-mobile emergency cooling apparatus for spent fuel pool of nuclear power plant; 2-spent fuel pool; 3-cooling system of original spent fuel pool; 4-emergency cooling system for spent fuel pool of nuclear power plant.

### DETAILED DESCRIPTION OF THE INVENTION

In order to make the objective, technical solutions and effects of the present invention clearer, the present invention will be further described in detail below in conjunction with accompanying drawings and embodiments. It should be understood that the embodiments described herein are only for explaining the present invention, not for limiting the scope of the present invention.

Referring to Figs. 2 to 4, the mobile emergency cooling apparatus for spent fuel pool of nuclear power plant according to one embodiment of the present invention includes a power equipment 10, a circulating cooling pump 12 and a cooling device 14;

The power equipment 10, the circulating cooling pump 12 and the cooling device 14 are connected in sequence and provided on a same mobile carrier platform 15. The inlet of the circulating cooling pump 12 is connected to a water guide pipeline 18 connected to the water intake of the original cooling system of the spent fuel pool via an inlet pipeline 16. The outlet of the circulating cooling pump 12 is connected to the inlet of the cooling device 14, and the outlet of the cooling device 14 is connected to the return water pipeline 22 via the outlet pipeline 20 to return the cooled pool water to the spent fuel pool.

A backflow pipeline 24 is connected between the outlet pipeline 20 and the inlet pipeline 16.

When the original cooling system of the spent fuel pool fails, the power equipment 10 drives the circulating cooling pump 12 and the cooling device 14 to work. The circulating cooling pump 12 delivers the introduced pool water from the spent fuel pool to the cooling device 14, and the cooling device 14 cools the pool water. After cooling, part of the pool water is returned to the inlet pipeline 16 via the backflow pipeline 24, and the remaining pool water is returned to the spent fuel pool.

The power equipment 10 includes a backup fuel tank 100 and a generator set 102 connected to the backup fuel tank 100. The backup fuel tank 100 is configured to provide fuel to the generator set 102. The generator set 102 is connected to the circulating cooling pump 12 and the cooling device 14 respectively, and is configured to drive the circulating cooling pump 12 and the cooling device 14 to work.

According to a preferred embodiment of the present invention, the generator set 102 is also provided with an automatic oil replenishment device (not shown). When the oil level of the oil tank of the generator set 102 is low, the automatic oil replenishment device can supply oil from the backup fuel tank 100 to the generator set 102, so as to realize long-term continuous operation of the generator set 102. In order to facilitate the night work of the operator, the generator set 102 is also provided with a lighting device (not shown). The lighting device is powered by a battery in the generator set 102.

The cooling device 14 includes a closed cooling tower 140. The inlet of the closed cooling tower 140 is the inlet of the cooling device 14 and is connected to the outlet of the circulating cooling pump 12 via a pipeline. The outlet of the closed cooling tower 140 is the outlet of the cooling device 14.

The closed cooling tower 140 is provided with a spray pump 144. The spray pump 144 circulates the spray water at the bottom (not shown) of the closed cooling tower 140 to the heat exchange coil (not shown) of the closed cooling tower 140. The spray water is evenly sprayed to the outer surface of the heat exchange coil via a spray pipe network (not shown), to cool the spent fuel pool water flowing in the heat exchange coil. The spray water falls back to the bottom of the closed cooling tower 140 due to gravity. The spray water is delivered to the upper part of the heat exchange coil via the spray pump 144. The spent fuel pool water flowing in the heat exchange coil is cooled in this manner repeatedly.

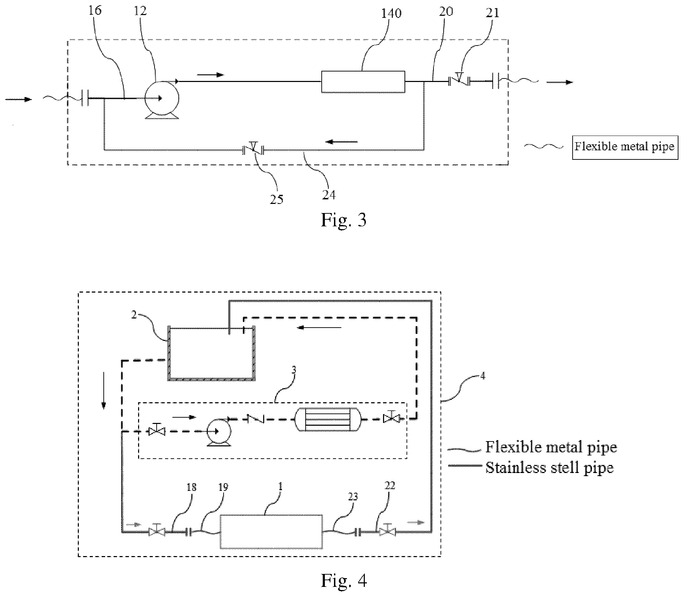

Referring to Fig. 3, if the temperature of the inlet fluid on the hot side of the closed cooling tower 140 is as high as 100°C for a long time, it will cause rapid scaling on the outer surface of the heat exchange coil of the closed cooling tower 140, which will eventually reduce the heat transfer performance of the closed cooling tower 140. In order to prevent the temperature of the fluid entering the closed cooling tower 140 from reaching 100°C for a long time, the outlet pipeline 20 of the closed cooling tower 140 is provided with a backflow pipeline 24 connected to the inlet pipeline 16 at the inlet of the circulating cooling pump 12. Part of the pool water cooled by the tower 140 flows back to the inlet pipeline 16 in front of the circulating cooling pump 12 through the backflow pipeline 24, and is mixed with the pool water of the spent fuel pool having a temperature of 100°C that has not been cooled. The backflow pipeline 24 is provided with a backflow control valve 25 for adjustng the flow rate of the backflow water in the backflow pipeline 24. At the same time, a control valve provided on the outlet pipeline 20 adjust the flow rate of the backflow water, so as to ensure that the temperature of the hot pool water entering the closed cooling tower 140 is not higher than 70°C.

According to a mobile emergency cooling apparatus in the prior art, the high-temperature spent fuel pool water directly enters the closed cooling tower and rapidly scales on the outer wall of the heat exchange tube of the closed cooling tower, resulting in a reduced cooling effect. The backflow arrangement according to the present invention can ensure that the fluid at the front hot side inlet of the closed cooling tower 140 is at an appropriate temperature, the outer wall of the heat exchange coil of the closed cooling tower 140 is not easy to scale, and implements good cooling effect.

According to a preferred embodiment of the present invention, the cooling device 14 includes a spray water supply tank 142 connected to the closed cooling tower 140. The spray water supply tank 142 supplies the closed cooling tower 140 in an automatic manner, so as to supplement the water loss of the closed cooling tower 140 that is evaporated by the spray water and dispersed to the outside. The closed cooling tower 140 is also provided with a fan (not shown), to deliver air to assist cooling of the pool water to be cooled.

Referring to Figs. 2 and 4, the mobile carrier platform 15 can be an independent mobile device, or a vehicle or other tools. In addition, the inlet of the mobile emergency cooling apparatus for spent fuel pool of nuclear power plant 1 is connected to the water guide pipeline 18 via a connecting pipeline 19, the outlet thereof and the return water pipeline 22 are connected through a connecting pipeline 23, to return the remaining pool water cooled by the closed cooling tower 140 to the spent fuel pool 2. The temperature of the pool water coming out of the spent fuel pool 2 is relatively high. The connecting pipeline 19 is generally a flexible metal pipe. The temperature of the pool water after being cooled by the cooling device is relatively low. The connecting pipeline 23 can be a flexible metal pipe or a flexible rubber pipe.

The power equipment and cooling device of the conventional emergency cooling apparatus for spent fuel pool of nuclear power plant are arranged on two to three trailers respectively. During operation, pipelines and cables are required to be connected between the vehicles. Therefore, the conventional emergency cooling apparatus for spent fuel pool has low system integration and poor coordination operation. In the embodiment of the present invention, the power equipment 10, the circulating cooling pump 12 and the cooling device 14 of the mobile emergency cooling apparatus for spent fuel pool of nuclear power plant 1 are provided on a same semi-trailer. Therefore, the equipment integration of the present invention is higher and coordinated operation of various equipments is convenient.

In addition, the mobile emergency cooling apparatus for spent fuel pool of nuclear power plant 1 of the present invention is an independent cooling module. A single cooling module can be put into operation to discharge heat of the spent fuel pool 2. Compared with the mobile emergency cooling apparatus in the prior art, the mobile emergency cooling apparatus for spent fuel pool of nuclear power plant 1 of the present invention is much independent, which can improve the usability of the mobile emergency cooling device.

In addition, in the mobile emergency cooling apparatus for spent fuel pool of nuclear power plant 1 of the present invention, the power equipment 10, the circulating cooling pump 12 and the cooling device 14 are fixedly connected in sequence by pipes and cables, and the device is filled with water in standby. Therefore, when put into operation, compared with the mobile emergency cooling apparatus in the prior art which needs to complete the connection between modules and the charging and draining operations before operation, the mobile emergency cooling apparatus for spent fuel pool of nuclear power plant 1 of the present invention can be put into operation quickly and, therefore, has a desirable emergency performance.

According to a preferred embodiment of the present invention, the mobile emergency cooling apparatus for spent fuel pool of nuclear power plant further includes a shielded box (not shown). The shielded box is arranged outside the power equipment 10 and the circulating cooling pump 12 and covers the power equipment 10 and the circulating cooling pump 12, to protect the equipment and reduce corrosion of the equipment by the external environment. Before the mobile emergency cooling apparatus for spent fuel pool of nuclear power plant of the present invention is put into operation, the shielding box can be opened to facilitate the operation of the apparatus. A control panel 26 is provided on the shielded box. The control panel 26 is connected to the generator set 102, the circulating cooling pump 12, the closed cooling tower fan (not shown) and the spray pump 144, and controls operation of the generator set 102, the circulating cooling pump 12, the closed cooling tower fan (not shown) and spray pump 144.

According to a preferred embodiment of the present invention, the pipelines and valves arranged between the circulating cooling pump 12 and the closed cooling tower 140 that are easily accessible by the operator are provided with a thermal insulation layer, to prevent the operator from being burned. If the entire pipeline is easily accessible by the operator, a thermal insulation layer can be provided on the outside of the entire pipeline.

According to a preferred embodiment of the present invention, the generator set 102 is also provided with lighting device (not shown), and the lighting device is powered by a battery of the generator set 102, to facilitate the operation of the operators at night.

The working principle of the mobile emergency cooling apparatus for spent fuel pool of nuclear power plant 1 of the present invention will be described in detail below in conjunction with Figs. 2 and 4.

When the nuclear power plant loses AC power and/or loses the final heat sink, the cooling function of the original spent fuel pool cooling system 3 is lost. At this time, the mobile emergency cooling apparatus for spent fuel pool of nuclear power plant 1 of the present invention can be put into use.

Specifically, the generator set 102 provides power for the circulating cooling pump 12 and the closed cooling tower 140 to drive the circulating cooling pump 12 and the closed cooling tower 140 to work. The spent fuel pool water having a temperature of up to 100° C is introduced from the inlet pipeline 16 of the circulating cooling pump 12, and is transmitted to the closed cooling tower 140 for cooling through the circulating cooling pump 12. Part of the cooled pool water flows back to the inlet pipeline 16 along the backflow pipeline 24 through the outlet pipeline 20 of the closed cooling tower 140, and is configured to dilute and cool the high temperature pool water entering the closed cooling tower 140. Another part of the pool water cooled by the closed cooling tower 140 is returned to the spent fuel pool 2 through the outlet pipeline 20 and the return water line 22, so as to cool the spent fuel pool 2.

Referring to Fig. 4, the present invention also provides an emergency cooling system for spent fuel pool of nuclear power plant 4 including the mobile emergency cooling apparatus for spent fuel pool of nuclear power plant 1 as previously described.

The emergency cooling system for spent fuel pool of nuclear power plant 4 of the present invention includes a spent fuel pool 2, a cooling system of an original spent fuel pool 3, and a mobile emergency cooling apparatus for spent fuel pool of nuclear power plant 1 provided in an embodiment of the present invention. The mobile emergency cooling apparatus for spent fuel pool of nuclear power plant 1 of the present invention is arranged in parallel with the cooling system of the original spent fuel pool 3, both used to cool the spent fuel pool 2. The difference lies in that the mobile emergency cooling apparatus for spent fuel pool of nuclear power plant 1 according to the embodiment of the present invention works when the cooling system of the original spent fuel pool 3 fails due to the accident of the loss of AC power exceeding the design basis of the nuclear power plant.

It should be noted that in the embodiment of the present invention, the emergency cooling system for spent fuel pool of nuclear power plant 4 may include at least one mobile emergency cooling apparatus for spent fuel pool of nuclear power plant 1. When the emergency cooling system for spent fuel pool of nuclear power plant 4 includes a number of mobile emergency cooling apparatuses for spent fuel pool of nuclear power plant 1, a number of mobile emergency cooling apparatuses for spent fuel pool of nuclear power plant 1 are arranged in parallel. Because the mobile emergency cooling apparatus for spent fuel pool of nuclear power plant 1 of the present invention is an independent cooling module, according to the heat load demand of the spent fuel pool 2, the operator can choose to operate a mobile emergency cooling apparatus for spent fuel pool of nuclear power plant 1 alone, or choose to operate a number of mobile emergency cooling apparatuses for spent fuel pool of nuclear power plant 1 in parallel.

It is understandable that, according to other embodiments of the present invention, the power equipment 10 can drive the circulating cooling pump 12 electrically or mechanically. The control panel 26 may be directly installed on the mobile carrier platform 15.

Compared with the prior art, the mobile emergency cooling apparatus for spent fuel pool of nuclear power plant of the present invention at least has the following advantages:
1) According to the present invention, the power equipment 10, the circulating cooling pump 12 and the cooling device 14 are provided onto a same mobile carrier platform 15. Equipment integration, coordinated operation and commissioning speed of the equipments can be improved remarkably. In addition, the mobile emergency cooling apparatus for spent fuel pool of nuclear power plant of the present invention can be used as an independent cooling device to discharge heat of the spent fuel pool 2.
2) When the original cooling system of spent fuel pool 3 fails, the power equipment 10 drives the circulating cooling pump 12 and the cooling device 14 to work. The circulating cooling pump 12 delivers the introduced water of the spent fuel pool 2 to the cooling device 14, and the cooling device 14 cools the pool water and sends the pool water back to the spent fuel pool 2, to realize the cooling of the spent fuel pool 2.
3) A backflow pipeline 24 is set between the outlet pipeline 20 and the inlet pipeline 16, to control the pool water entering the cooling device 14 at an appropriate temperature, thereby avoiding the high temperature water in the spent fuel pool 2 entering the cooling device 14 directly, preventing the cooling device 14 from scaling rapidly, and improving the cooling effect.

It is to be understood that the invention is not to be limited to the specific embodiments disclosed and that modifications and other embodiments are intended to be included within the scope of protection, which is defined in the appended claims.

## Claims

1. A mobile emergency cooling apparatus for spent fuel pool of nuclear power plant, comprising: a power equipment (10), a circulating cooling pump (12), a cooling device (14), an inlet pipeline (16), an outlet pipeline (20), and a mobile carrier platform (15), wherein the power equipment (10), the circulating cooling pump (12) and the cooling device (14) are connected in sequence and are arranged on the same mobile carrier platform (15), an inlet of the circulating cooling pump (12) is adapted to be connected to a water guide pipeline (18) connected to a water intake of an original cooling system of spent fuel pool through the inlet pipeline (16), an outlet of the circulating cooling pump (12) is connected to an inlet of the cooling device (14), an outlet of the cooling device (14) is connected to the outlet pipeline (20), which is adapted to be connected to a water return pipeline (22) to return cooled pool water to the spent fuel pool; the apparatus further comprising a backflow pipeline (24) connected between the outlet pipeline (20) and the inlet pipeline (16); wherein the apparatus is adapted such, that when the original cooling system of the spent fuel pool fails, the power equipment (10) drives the circulating cooling pump (12) and the cooling device (14) to work, wherein in use, the circulating cooling pump (12) delivers the introduced pool water from the spent fuel pool to the cooling device (14), the cooling device (14) cools the pool water, and after cooling, part of the pool water is returned to the inlet pipeline (16) through the backflow pipeline (24), and the remaining part of the pool water is returned to the spent fuel pool (2).

2. The mobile emergency cooling apparatus for spent fuel pool of nuclear power plant of claim 1, wherein the power equipment (10) comprises a backup fuel tank (100) and a generator set (102), the backup fuel tank (100) is connected to the generator set (102) and configured to provide fuel for the generator set (102), the generator set (102) is connected to the circulating cooling pump (12) and the cooling device (14) and configured to drive the circulating cooling pump (12) and the cooling device (14) to work.

3. The mobile emergency cooling apparatus for spent fuel pool of nuclear power plant of claim 1, wherein the cooling device (14) comprises a closed cooling tower (140); an inlet of the closed cooling tower (140) is an inlet of the cooling device (14), an outlet of the closed cooling tower (140) is an outlet of the cooling device (14); after pool water of the spent fuel pool delivered by the circulating cooling pump (12) is cooled by the closed cooling tower (140), part of the pool water is returned to the inlet pipeline (16) before the inlet of the circulating cooling pump (12) via a backflow pipeline (24), remaining part of the pool water is returned to the spent fuel pool via the outlet pipeline (20) and the return water pipeline (22).

4. The mobile emergency cooling apparatus for spent fuel pool of nuclear power plant of claim 3, wherein the cooling device (14) comprises a spray water supply tank (142) connected to the closed cooling tower (140) and configured to provide spray water to the closed cooling tower (140).

5. The mobile emergency cooling apparatus for spent fuel pool of nuclear power plant of claim 3, wherein the backflow pipeline (24) is provided with a backflow control valve (25) for adjusting flow in the backflow pipeline (24).

6. The mobile emergency cooling apparatus for spent fuel pool of nuclear power plant of claim 1, wherein the inlet pipeline (16) is connected to the water guide pipeline (18) via a flexible metal pipe, the outlet pipeline (20) is connected to the return water pipeline (22) via a flexible metal pipe or a flexible rubber pipe.

7. The mobile emergency cooling apparatus for spent fuel pool of nuclear power plant of claim 1, further comprising a shielding box covering the power equipment (10) and the circulating cooling pump (12), and the shielding box is provided with a control panel.

8. The mobile emergency cooling apparatus for spent fuel pool of nuclear power plant of claim 2, wherein the generator set (102) is connected with a lighting device.

9. The mobile emergency cooling apparatus for spent fuel pool of nuclear power plant of claim 3, wherein a thermal insulation layer is at least partially provided on pipeline between the circulating cooling pump (12) and the closed cooling tower (140).

10. The mobile emergency cooling apparatus for spent fuel pool of nuclear power plant of claim 1, wherein the power equipment (10) drives the circulating cooling pump (12) electrically or mechanically.

11. The mobile emergency cooling apparatus for spent fuel pool of nuclear power plant of claim 1, wherein the mobile carrier platform (15) is provided with a control panel (26).

12. An emergency cooling system for spent fuel pool of nuclear power plant, comprising a spent fuel pool (2) and at least one mobile emergency cooling apparatus for spent fuel pool of nuclear power plant (1) according to any one of claims 1 to 11.

## Patentansprüche

1. Mobile Notkühlvorrichtung für ein Abklingbecken eines Kernkraftwerks, umfassend: ein Antriebsaggregat (10), eine Umlaufkühlpumpe (12) und eine Kühlvorrichtung (14), eine Einlassleitung (16), eine Auslassleitung (20) und eine mobile Trägerplattform (15), wobei das Antriebsaggregat (10), die Umlaufkühlpumpe (12) und die Kühlvorrichtung (14) hintereinander geschaltet und auf der gleichen mobilen Trägerplattform (15) angeordnet sind, wobei ein Einlass der Umlaufkühlpumpe (12) ausgebildet ist, um mit einer Wasserführungsleitung (18) verbunden zu werden, die mit einem Wassereinlass eines ursprünglichen Kühlsystems des Abklingbeckens durch die Einlassleitung (16) verbunden ist, ein Auslass der Umlaufkühlpumpe (12) mit einem Einlass der Kühlvorrichtung (14) verbunden ist, ein Auslass der Kühlvorrichtung (14) mit der Auslassleitung (20) verbunden ist, welche dazu ausgebildet ist, mit einer Wasserrückführleitung (22) verbunden zu werden, um gekühltes Beckenwasser in das Abklingbecken zurückzuführen, wobei die Vorrichtung weiter eine Rückflussleitung (24) umfasst, die zwischen der Auslassleitung (20) und der Einlassleitung (16) angeschlossen ist, wobei die Vorrichtung so ausgebildet ist, dass, wenn das ursprüngliche Kühlsystem des Abklingbeckens ausfällt, das Antriebsaggregat (10) die Umlaufkühlpumpe (12) und die Kühlvorrichtung (14) zur Arbeit antreibt, wobei die Umlaufkühlpumpe (12) in Arbeit das eingeleitete Beckenwasser aus dem Abklingbecken zu der Kühlvorrichtung (14) fördert, die Kühlvorrichtung (14) das Beckenwasser kühlt und nach dem Kühlen ein Teil des Beckenwassers durch die Rückflussleitung (24) zu der Einlassleitung (16) zurückgeführt wird und der verbleibende Teil des Beckenwassers in das Abklingbecken (2) zurückgeführt wird.

2. Mobile Notkühlvorrichtung für ein Abklingbecken eines Kernkraftwerks nach Anspruch 1, wobei das Antriebsaggregat (10) einen Ersatzbrennstofftank (100) und einen Generatorsatz (102) umfasst, wobei der Ersatzbrennstofftank (100) mit dem Generatorsatz (102) verbunden und dazu ausgebildet ist, Kraftstoff für den Generatorsatz (102) bereitzustellen, der Generatorsatz (102) mit der Umlaufkühlpumpe (12) und der Kühlvorrichtung (14) verbunden und dazu ausgebildet ist, die Umlaufkühlpumpe (12) und die Kühlvorrichtung (14) zur Arbeit anzutreiben.

3. Mobile Notkühlvorrichtung für ein Abklingbecken eines Kernkraftwerks nach Anspruch 1, wobei die Kühlvorrichtung (14) einen geschlossenen Kühlturm (140) umfasst, ein Einlass des geschlossenen Kühlturms (140) ein Einlass der Kühlvorrichtung (14) ist, ein Auslass des geschlossenen Kühlturms (140) ein Auslass der Kühlvorrichtung (14) ist, wobei, nachdem das von der Umlaufkühlpumpe (12) gelieferte Beckenwasser des Abklingbeckens durch den geschlossenen Kühlturm (140) gekühlt worden ist, ein Teil des Beckenwassers zu der Einlassleitung (16) vor dem Einlass der Umlaufkühlpumpe (12) über eine Rückflussleitung (24) zurückgeführt wird, der verbleibende Teil des Beckenwassers über die Auslassleitung (20) und die Wasserrückführleitung (22) in das Abklingbecken zurückgeführt wird.

4. Mobile Notkühlvorrichtung für ein Abklingbecken eines Kernkraftwerks nach Anspruch 3, wobei die Kühlvorrichtung (14) einen Sprühwasser-Vorratstank (142) umfasst, der mit dem geschlossenen Kühlturm (140) verbunden und dazu ausgebildet ist, Sprühwasser an den geschlossenen Kühlturm (140) zu liefern.

5. Mobile Notkühlvorrichtung für ein Abklingbecken eines Kernkraftwerks nach Anspruch 3, wobei die Rückflussleitung (24) mit einem Rückflusssteuerventil (25) zum Einstellen der Strömung in der Rückflussleitung (24) versehen ist.

6. Mobile Notkühlvorrichtung für ein Abklingbecken eines Kernkraftwerks nach Anspruch 1, wobei die Einlassleitung (16) mit der Wasserführungsleitung (18) über ein flexibles Metallrohr verbunden ist, die Auslassleitung (20) mit der Wasserrückführleitung (22) über ein flexibles Metallrohr oder einen flexiblen Kautschukschlauch verbunden ist.

7. Mobile Notkühlvorrichtung für ein Abklingbecken eines Kernkraftwerks nach Anspruch 1, weiter einen Abschirmkasten umfassend, der das Antriebsaggregat (10) und die Umlaufkühlpumpe (12) abdeckt, und wobei der Abschirmkasten mit einem Steuerpanel ausgestattet ist.

8. Mobile Notkühlvorrichtung für ein Abklingbecken eines Kernkraftwerks nach Anspruch 2, wobei der Generatorsatz (102) mit einer Beleuchtungsvorrichtung verbunden ist.

9. Mobile Notkühlvorrichtung für ein Abklingbecken eines Kernkraftwerks nach Anspruch 3, wobei eine Wärmeisolationsschicht zumindest teilweise an Leitungen zwischen der Umlaufkühlpumpe (12) und dem geschlossenen Kühlturm (140) vorgesehen ist.

10. Mobile Notkühlvorrichtung für ein Abklingbecken eines Kernkraftwerks nach Anspruch 1, wobei das Antriebsaggregat (10) die Umlaufkühlpumpe (12) elektrisch oder mechanisch antreibt.

11. Mobile Notkühlvorrichtung für ein Abklingbecken eines Kernkraftwerks nach Anspruch 1, wobei die mobile Trägerplattform (15) mit einem Steuerpanel (26) ausgestattet ist.

12. Notkühlsystem für ein Abklingbecken eines Kernkraftwerks, umfassend ein Abklingbecken (2) und mindestens eine mobile Notkühlvorrichtung für ein Abklingbecken eines Kernkraftwerks (1) nach einem der Ansprüche 1 bis 11.

## Revendications

1. Appareil de refroidissement d'urgence mobile destiné à une piscine de combustible usé de centrale nucléaire, comprenant : un équipement électrique (10), une pompe de refroidissement en circulation (12), un dispositif de refroidissement (14), une canalisation d'entrée (16), une canalisation de sortie (20) et une plateforme support mobile (15),
dans lequel l'équipement électrique (10), la pompe de refroidissement en circulation (12) et le dispositif de refroidissement (14) sont connectés en série et sont disposés sur la même plateforme support mobile (15), une entrée de la pompe de refroidissement en circulation (12) est adaptée pour être connectée à une canalisation de guidage d'eau (18) connectée à une admission d'eau d'un système de refroidissement d'origine de la piscine de combustible usé par le biais de la canalisation d'entrée (16), une sortie de la pompe de refroidissement en circulation (12) est connectée à une entrée du dispositif de refroidissement (14), une sortie du dispositif de refroidissement (14) est connectée à la canalisation de sortie (20), qui est adaptée pour être connectée à une canalisation de retour d'eau (22) pour renvoyer l'eau de piscine refroidie vers la piscine de combustible usé ;
l'appareil comprenant en outre une
canalisation de reflux (24) connectée entre la canalisation de sortie (20) et la canalisation d'entrée (16) ; dans lequel l'appareil est adapté de sorte que, lorsque le système de refroidissement d'origine de la piscine de combustible usé tombe en panne, l'équipement électrique (10) entraîne la pompe de refroidissement en circulation (12) et le dispositif de refroidissement (14) pour qu'ils fonctionnent, dans lequel, en utilisation, la pompe de refroidissement en circulation (12) délivre l'eau de piscine introduite depuis la piscine de combustible usé vers le dispositif de refroidissement (14), le dispositif de refroidissement (14) refroidit l'eau de piscine et, après refroidissement, une partie de l'eau de piscine est renvoyée vers la canalisation d'entrée (16) par le biais de la canalisation de reflux (24), et la partie restante de l'eau de piscine est renvoyée vers la piscine de combustible usé (2).

2. Appareil de refroidissement d'urgence mobile destiné à une piscine de combustible usé de centrale nucléaire selon la revendication 1, dans lequel l'équipement électrique (10) comprend un réservoir de combustible de secours (100) et un groupe électrogène (102), le réservoir de combustible de secours (100) est connecté au groupe électrogène (102) et configuré pour fournir du carburant au groupe électrogène (102), le groupe électrogène (102) est connecté à la pompe de refroidissement en circulation (12) et au dispositif de refroidissement (14) et configuré pour entraîner la pompe de refroidissement en circulation (12) et le dispositif de refroidissement (14) pour qu'ils fonctionnent.

3. Appareil de refroidissement d'urgence mobile pour piscine de combustible usé de centrale nucléaire selon la revendication 1, dans lequel le dispositif de refroidissement (14) comprend une tour de refroidissement fermée (140) ; une entrée de la tour de refroidissement fermée (140) est une entrée du dispositif de refroidissement (14), une sortie de la tour de refroidissement fermée (140) est une sortie du dispositif de refroidissement (14) ; après que l'eau de piscine de la piscine de combustible usé délivrée par la pompe de refroidissement à circulation (12) est refroidie par la tour de refroidissement fermée (140), une partie de l'eau de piscine est renvoyée vers la canalisation d'entrée (16) avant l'entrée de la pompe de refroidissement en circulation (12) via une canalisation de reflux (24), la partie restante de l'eau de piscine est renvoyée vers la piscine de combustible usé via la canalisation de sortie (20) et la canalisation d'eau de retour (22).

4. Appareil de refroidissement d'urgence mobile pour piscine de combustible usé de centrale nucléaire selon la revendication 3, dans lequel le dispositif de refroidissement (14) comprend un réservoir d'alimentation en eau de pulvérisation (142) connecté à la tour de refroidissement fermée (140) et configuré pour fournir de l'eau de pulvérisation à la tour de refroidissement fermée (140).

5. Appareil de refroidissement d'urgence mobile pour piscine de combustible usé de centrale nucléaire selon la revendication 3, dans lequel la canalisation de reflux (24) est pourvue d'une soupape de commande de reflux (25) pour ajuster le débit dans la canalisation de reflux (24).

6. Appareil de refroidissement d'urgence mobile destiné à une piscine de combustible usé de centrale nucléaire selon la revendication 1, dans lequel la canalisation d'entrée (16) est connectée à la canalisation de guidage d'eau (18) via un tuyau métallique flexible, la canalisation de sortie (20) est connectée à la canalisation d'eau de retour (22) via un tuyau métallique flexible ou un tuyau flexible en caoutchouc.

7. Appareil de refroidissement d'urgence mobile destiné à une piscine de combustible usé de centrale nucléaire selon la revendication 1, comprenant en outre un boîtier de blindage couvrant l'équipement électrique (10) et la pompe de refroidissement en circulation (12), et le boîtier de blindage est pourvu d'un panneau de commande.

8. Appareil de refroidissement d'urgence mobile destiné à une piscine de combustible usé de centrale nucléaire selon la revendication 2, dans lequel le groupe électrogène (102) est connecté à un dispositif d'éclairage.

9. Appareil de refroidissement d'urgence mobile destiné à une piscine de combustible usé de centrale nucléaire selon la revendication 3, dans lequel une couche d'isolation thermique est au moins partiellement prévue sur la canalisation entre la pompe de refroidissement en circulation (12) et la tour de refroidissement fermée (140).

10. Appareil de refroidissement d'urgence mobile destiné à une piscine de combustible usé de centrale nucléaire selon la revendication 1, dans lequel l'équipement électrique (10) entraîne la pompe de refroidissement en circulation (12) électriquement ou mécaniquement.

11. Appareil de refroidissement d'urgence mobile destiné à une piscine de combustible usé de centrale nucléaire selon la revendication 1, dans lequel la plateforme support mobile (15) est pourvue d'un panneau de commande (26).

12. Système de refroidissement d'urgence destiné à une piscine de combustible usé de centrale nucléaire, comprenant une piscine de combustible usé (2) et au moins un appareil de refroidissement d'urgence mobile destiné à une piscine de combustible usé de centrale nucléaire (1) selon l'une quelconque des revendications 1 à 11.
